# EUROPEAN PATENT APPLICATION

(11) **EP 4 711 943 A1**
(43) Date of publication of application: **18.03.2026**
(21) Application number: 25199280.6
(22) Date of filing: 01.09.2025
(51) Int. Cl.: G06F 16/18, G06F 16/21

(54) **ACTIVE FILE MANAGEMENT IN DISTRIBUTED MATERIAL TESTING SYSTEMS**

(30) Priority: 16.09.2024 US 202463694972 P; 26.08.2025 US 202519310320
(71) Applicant: Illinois Tool Works Inc., Glenview IL 60025 (US)
(72) Inventor: CAESAR, Daniel Vincent, Glenview, 60025 (US); NICOL, Scott, Glenview, 60025 (US); MORSE, Jason, Glenview, 60025 (US)
(74) Representative: HGF

(57) **Abstract**

Described herein are examples of distributed material testing systems that allow users with higher level and/or administrative permissions to revert to use of an older (and/or obsolete) version of a test file (and/or other file) as the "active" file version for testing. In some examples, users with lower level permissions are restricted to using the "active" version of a test file for testing, so as to ensure that most users and/or material testing systems use the same test file version. However, some users are authorized to make an older, obsolete, test file version the "active" test file version in case, for example, there is some issue with the current active test file version. Through this reversion, testing may be able to continue in at least some capacity while a new test file is prepared and/or the issues with the prior active test file are resolved.

## Description

### CROSS REFERENCE TO RELATED APPLICATIONS

This application claims priority to, and the benefit of, U.S. Provisional Patent Application No. 63/694,972, filed September 16, 2024, entitled "ACTIVE FILE MANAGEMENT IN DISTRIBUTED MATERIAL TESTING SYSTEMS," the entire contents of which are hereby incorporated by reference.

### TECHNICAL FIELD

The present disclosure generally relates to distributed material testing systems and, more particularly, to active file management in distributed material testing systems.

### BACKGROUND

Material testing machines are used to test the properties (e.g., tensile/compressive strength) of various material specimens. The particular method of testing (a.k.a. test method) may vary from material specimen to material specimen and/or material testing machine to material testing machine.

Limitations and disadvantages of conventional and traditional approaches will become apparent to one of skill in the art, through comparison of such systems with the present disclosure as set forth in the remainder of the present application with reference to the drawings.

### BRIEF SUMMARY

The present disclosure is directed to active file management in distributed material testing systems, substantially as illustrated by and/or described in connection with at least one of the figures, and as set forth more completely in the claims.

These and other advantages, aspects and novel features of the present disclosure, as well as details of an illustrated example thereof, will be more fully understood from the following description and drawings.

### BRIEF DESCRIPTION OF THE DRAWINGS

FIG. 1 shows an example material testing system, in accordance with aspects of this disclosure.
FIG. 2 shows a block diagram of the example material testing system of FIG. 1, in accordance with aspects of this disclosure.
FIG. 3 shows a block diagram of an example distributed material testing system, in accordance with aspects of this disclosure.
FIG. 4 shows a block diagram of an example central data repository of the example distributed material testing system of FIG. 3, in accordance with aspects of this disclosure.
FIG. 5 shows a flowchart illustrating an example test file management process of the distributed material testing system of FIG. 3, in accordance with aspects of this disclosure.
FIGS. 6a-6h are examples of graphical user interfaces (GUIs) that might be shown during the test file management process of FIG. 5, in accordance with aspects of this disclosure.

The figures are not necessarily to scale. Where appropriate, the same or similar reference numerals are used in the figures to refer to similar or identical elements. For example, reference numerals utilizing lettering (e.g., grip 124a, grip 124b) refer to instances of the same reference numeral that does not have the lettering (e.g., grips 124).

### DETAILED DESCRIPTION

Disclosed herein are examples of distributed material testing systems that allow users with higher and/or administrative permissions to revert to use of an older (and/or obsolete) version of a test file (and/or other file) as the "active" file version for testing. In some examples, users with lower level permissions are restricted to using the "active" version of a test file for testing, so as to ensure that most users and/or material testing systems use the same test file version. However, users with higher and/or administrative permissions are authorized to make an older, obsolete, test file version the "active" test file version in case, for example, there is some issue with the current active test file version. Through this reversion to an older, obsolete, test file version, testing may be able to continue in at least some capacity while a new version of the test file is prepared and/or the issues with the prior "active" version of the test file are resolved.

Some examples of the present disclosure relate to a non-transitory computer readable medium comprising: a first version of a file; a second version of the file; versioning data indicating that the first version of the file is an active version of the file and the second version of the file is an obsolete version of the file; permission data indicating that: a first user is authorized to access or execute the active version of the file but not modify the active version of the file, and that the first user is not authorized to access, modify, or execute the obsolete version of the file, and a second user is authorized to access, modify, and execute the active version of the file and the obsolete version of the file; and machine readable instructions which, when executed by processing circuitry, cause the processing circuitry to: in response to receiving a reversion request from the second user via a user interface, modify the versioning data to indicate that the second version of the file is once again the active version of the file, and the first version of the file is the obsolete version of the file.

In some examples, the file comprises a test file defining a test method, the test method comprising a method of performing a test of a sample specimen using a material testing system, or of analyzing a test result of the test. In some examples, the material testing system comprises: a material testing machine, the material testing machine comprising a test machine sensor, a test machine actuator, and a test machine controller configured to control the test machine actuator, and a testing workstation communicatively connected to the material testing machine. In some examples, the versioning data includes a version history that indicates that the second version of the file was the active version of the file before the versioning data was changed to indicate that the second version of the file was the obsolete version of the file.

In some examples, the non-transitory computer readable medium further comprises machine readable instructions which, when executed by the processing circuitry, cause the processing circuitry to: in response to receiving the reversion request, determine, based on the permission data, whether a review of the reversion request is required before the versioning data is modified. In some examples, the non-transitory computer readable medium further comprises machine readable instructions which, when executed by the processing circuitry, cause the processing circuitry to: in response to determining the review is not needed, modify the versioning data to indicate that the second version of the file is once again the active version of the file, and the first version of the file is the obsolete version of the file. In some examples, the non-transitory computer readable medium further comprises machine readable instructions which, when executed by the processing circuitry, cause the processing circuitry to: in response to determining the review is needed, modify the versioning data to indicate that the second version of the file is pending review, notify a third user that the second version of the file is awaiting their review, and in response to receiving a review approval input from the third user, modify the versioning data to indicate that the second version of the file is the active version of the file and the first version of the file is the obsolete version of the file.

Some examples of the present disclosure relate to a system, comprising: a central data repository in communication with a material testing system, the central data repository storing: a first version of a test file, the test file defining a test method, the test method comprising a method of performing a test of a sample specimen using the material testing system, or of analyzing a test result of the test, a second version of the test file, versioning data indicating that the first version of the test file is an active version of the test file and the second version of the test file is an obsolete version of the test file, permission data indicating that a first user is authorized to access or execute the active version of the test file but not modify the active version of the test file, and that the first user is not authorized to access, modify, or execute the obsolete version of the test file, the permission data further indicating that a second user is authorized to access, modify, and execute the active version of the test file and the obsolete version of the test file; a user interface configured to receive a reversion request from the second user; and a central server comprising, or in communication with, the central data repository, the central server comprising central server processing circuitry configured to: in response to the reversion request, modify the versioning data to indicate that the second version of the test file is once again the active version of the test file, and the first version of the test file is the obsolete version of the test file.

In some examples, the central data repository is in communication with a plurality of material testing systems comprising the material testing system, the test method defined by the test file being performable by each material testing system of two or more material testing systems of the plurality of material testing systems. In some examples, the material testing system comprises: a material testing machine, the material testing machine comprising a test machine sensor, a test machine actuator, and a test machine controller configured to control the test machine actuator, and a testing workstation communicatively connected to the material testing machine. In some examples, in response to the user interface receiving an execution request from the first user or the second user to execute the active version of the test file, the testing workstation is configured to communicate with the test machine controller to control the material testing machine and conduct the test method defined by the active version of the test file.

In some examples, the central server processing circuitry is further configured to: in response to receiving the reversion request, determine, based on the permission data, whether a review of the reversion request is required before the versioning data is modified. In some examples, the central server processing circuitry is configured to: in response to determining the review is not needed, modify the versioning data to indicate that the second version of the file is once again the active version of the file, and the first version of the file is the obsolete version of the file. In some examples, the central server processing circuitry is configured to: in response to determining the review is needed, modify the versioning data to indicate that the second version of the file is pending review, notify a third user that the pending review version of the file is awaiting their review, and in response to receiving a review approval input from the third user, modify the versioning data to indicate that the second version of the file is the active version of the file and the first version of the file is the obsolete version of the file.

Some examples of the present disclosure relate to a method, comprising: storing, in a central data repository that is in communication with a material testing system: a first version of a test file, the test file defining a test method, the test method comprising a method of performing a test of a sample specimen using the material testing system, or of analyzing a test result of the test, a second version of the test file, versioning data indicating that the first version of the test file is an active version of the test file and the second version of the test file is an obsolete version of the test file, permission data indicating that: a first user is authorized to access or execute the active version of the test file but not modify the active version of the test file, and that the first user is not authorized to access, modify, or execute the obsolete version of the test file, and a second user is authorized to access, modify, and execute the active version of the test file and the obsolete version of the test file; receiving a reversion request from the second user via a user interface; and in response to receiving the reversion request from the second user, modifying the versioning data via central server processing circuitry of a central server to indicate that the second version of the test file is once again the active version of the test file, and the first version of the test file is the obsolete version of the test file.

In some examples, the central data repository is in communication with a plurality of material testing systems comprising the material testing system, the test method defined by the test file being performable by each material testing system of two or more material testing systems of the plurality of material testing systems. In some examples, the material testing system comprises: a material testing machine, the material testing machine comprising a test machine sensor, a test machine actuator, and a test machine controller configured to control the test machine actuator, and a testing workstation communicatively connected to the material testing machine. In some examples, the method further comprises: in response receiving, via the user interface, an execution request from the first user or the second user to execute the active version of the test file, conducting the test method defined by the active version of the test file via the material testing machine.

In some examples, the method further comprises: in response to receiving the reversion request, determine, via the central server processing circuitry and based on the permission data, whether a review of the reversion request is required before the versioning data is modified; and in response to determining the review is not needed, modify the versioning data to indicate that the second version of the file is once again the active version of the file, and the first version of the file is the obsolete version of the file. In some examples, the method further comprises: in response to receiving the reversion request, determine, via the central server processing circuitry and based on the permission data, whether a review of the reversion request is required before the versioning data is modified; and in response to determining the review is needed, modify the versioning data, via the central server processing, to indicate that the second version of the file is pending review, notify a third user, via the central server processing, that the pending review version of the file is awaiting their review, and in response to receiving a review approval input from the third user, modify the versioning data, via the central server processing, to indicate that the second version of the file is the active version of the file and the first version of the file is the obsolete version of the file.

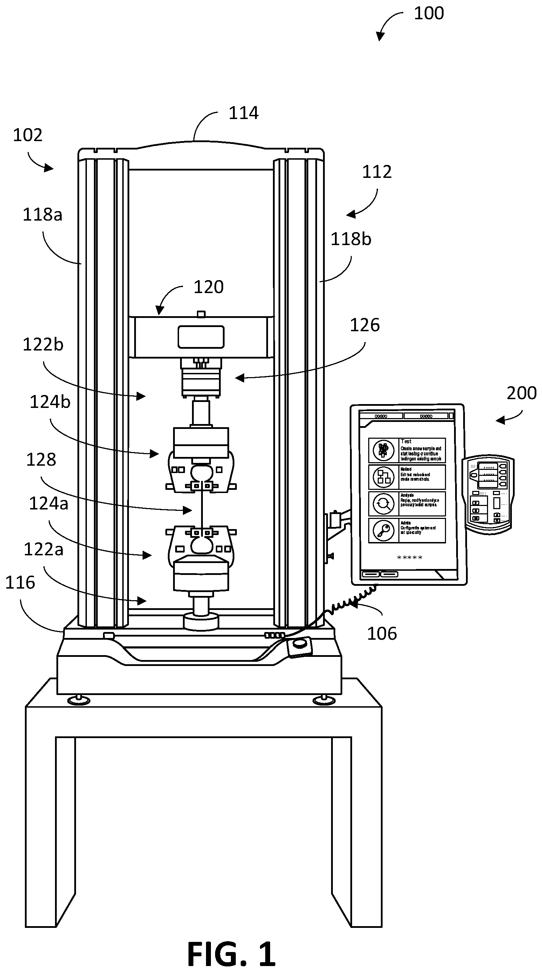

FIG. 1 shows an example material testing system 100. As shown, the material testing system 100 includes a material testing machine 102 (also known as a universal testing machine), and a computing system 200 connected to the material testing machine 102 through cable 106. While shown as being physically connected, in some examples, the connections may be wireless rather than wired.

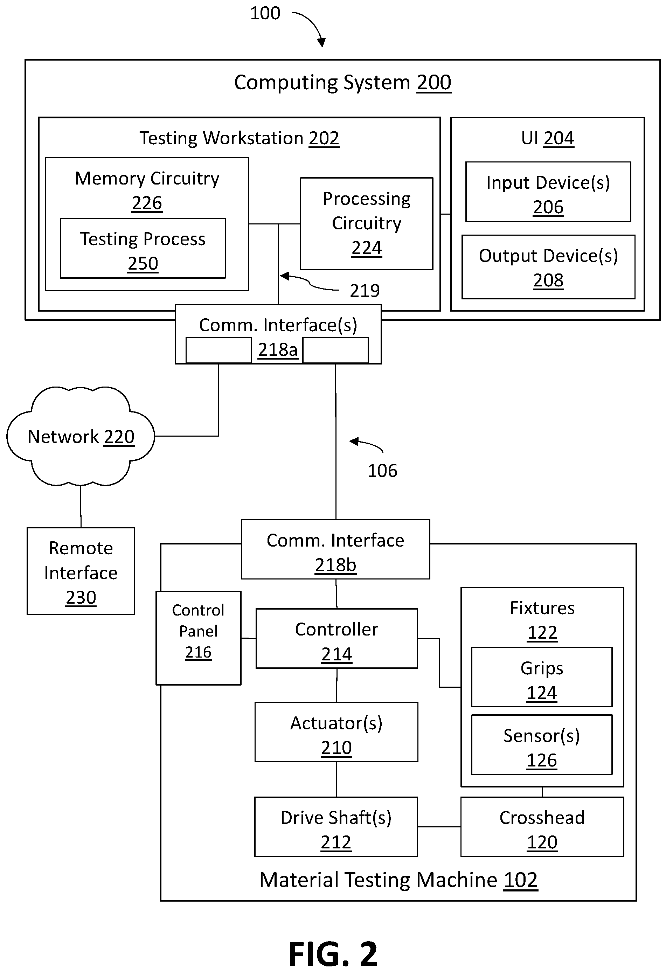

In the example of FIG. 1, the material testing machine 102 includes a frame 112. In some examples, the frame 112 provides rigid structural support for the other components of the material testing machine 102. As shown, the frame 112 comprises a top plate 114 and a bottom base 116 connected by two columns 118. In some examples, the columns 118 of the frame 112 may house guide rails and/or drive shafts 212 of the material testing machine 102 (see, e.g., FIG. 2).

In the example of FIG. 1, a movable crosshead 120 extends between the columns 118. In some examples, the movable crosshead 120 may be connected to the guide rails and/or drive shafts 212 housed in the columns 118, and/or configured to move toward and/or away from the base 116 through (e.g., motorized) actuation of the drive shaft(s) 212. While one movable crosshead 120 is shown in the example of FIG. 1, in some examples, the material testing machine 102 may have multiple movable crossheads 120, and/or other movable members.

In the example of FIG. 1, a fixture 122 is attached to the bottom base 116 of the frame 112, as well as to the movable crosshead 120. As shown, the lower fixture 122a includes a grip 124a, while the upper fixture 122b includes both a test sensor 126 and a grip 124b. While one test sensor 126 and two grips 124 are shown in the example of FIG. 1, in some examples, the testing machine 102 may include more or fewer test sensors 126 and/or grips 124.

In the example of FIG. 1, the grips 124 are holding a test specimen 128. While shown as a (e.g., steel) rope/wire, in some examples, the test specimen 128 may be some other type of material and/or component. While shown as being rope holders, in some examples, the grip 124a and/or grip 124b may alternatively, or additionally, be configured as a bolt holder, wedge grip, side acting grip, manual grip, roller grip, capstan grip, and/or syringe holder. In some examples, one or both of the grips 124 may be replaced by a compression platen configured to compress the test specimen 128.

In the example of FIG. 1, the test sensor 126 is connected to the grip 124, such that the test sensor 126 can measure forces acting on the grip 124 (and/or specimen 128, crosshead 120, etc.). In some examples, the test sensor 126 may be a load cell. In some examples, the test sensor 126 may be some other type of sensor.

In some examples, the material testing machine 102 may be configured for static mechanical testing. For example, the material testing machine 102 may be configured for compression strength testing, tension strength testing, shear strength testing, bend strength testing, deflection strength testing, tearing strength testing, peel strength testing (e.g., strength of an adhesive bond), torsional strength testing, and/or any other compressive and/or tensile testing. Additionally or alternatively, the material testing machine 102 may be configured to perform dynamic testing.

In some examples, the material testing machine 102 is configured to interface with the computing system 200 to conduct a test method. For example, the computing system 200 may communicate with a controller 214 (see, e.g., FIG. 2) of the material testing machine 102 to conduct the test method.

FIG. 2 is a block diagram showing details of the computing system 200, as well as additional details of the material testing machine 102. In the example of FIG. 2, the example material testing machine 102 includes one or more actuators 210 connected with one or more drive shafts 212. In some examples, the actuators 210 may be used to provide force to, and/or induce motion of, the drive shafts 212. In some examples, the actuators 210 may include electric motors, pneumatic actuators, hydraulic actuators, piezoelectric actuators, relays, and/or switches.

The drive shafts 212 are further shown connected to the movable crosshead 120, such that movement of the drive shaft(s) 212 via the actuator(s) 210 will result in movement of the movable crosshead 120. While termed drive shafts 212 in the example of FIG. 2, in some examples, the drive shafts 212 may be some other mechanical means of moving the movable crosshead 120 though inducement by the actuator(s) 210.

The example material testing machine 102 further includes a controller 214 in electrical communication with the actuator(s) 210. In some examples, the controller 214 may include processing circuitry and/or memory circuitry. In some examples, the controller 214 may be configured to control the material testing machine 102 based on one or more commands, control inputs, and/or test parameters. In some examples, the controller 214 may be configured to translate commands, control inputs, and/or test parameters (e.g., received from the computing system 200) to appropriate (e.g., electrical) signals that may be delivered to the actuator(s) 210, thereby controlling operation of the material testing machine 102 (e.g., via the actuator(s) 210). For example, the controller 214 may provide one or more signals(s) commanding more or less electrical power be provided to the actuator(s) 210, to thereby increase or decrease applied force.

In the example of FIG. 2, the controller 214 is further in electrical communication with the fixtures 122 (e.g., the grips 124 and test sensor(s) 126). In some examples, the controller 214 may be configured to translate commands, control inputs, and/or test parameters (e.g., received from the computing system 200) to appropriate (e.g., electrical) signals that may be delivered to the grips 124, to thereby control (e.g., grip or release) operation of the grips 124. In some examples, the controller 214 may be configured to translate commands, control inputs, and/or parameters (e.g., received from the computing system 200) to appropriate (e.g., electrical) signals that may be delivered to the sensor(s) 126, to thereby control operation of the sensor(s) 126. In some examples, the controller 214 may be configured to translate measurement data received from the sensor(s) 126, and/or send measurement data to the computing system 200.

The example controller 214 is further in electrical communication with a control panel 216 of the material testing machine 102. In some examples, the control panel 216 may include one or more input devices (e.g., buttons, switches, slides, knobs, microphones, dials, and/or other electromechanical input devices). In some examples, the control panel 216 may be used by an operator to directly control the material testing machine 102. In some examples, the controller 214 may be configured to translate commands, control inputs, and/or test parameters received via the control panel 216 to appropriate (e.g., electrical) signals that may be delivered to the actuator(s) 210 and/or grip(s) 124 to control the material testing machine 102.

The controller 214 is also shown in electrical communication with a communication interface 218b of the material testing machine 102. In some examples, the communication interface 218b comprises a network interface. In some examples, the communication interface 218b includes hardware, firmware, and/or software to connect the material testing machine 102 to a complementary workstation communication interface 218a of the computing system 200. In some examples, the controller 214 may receive information (e.g., commands) from the computing system 200 through the communication interfaces 218, and/or send information (e.g., measurement data from sensor(s) 126) to the computing system 200 through the workstation communication interfaces 218.

In the example of FIG. 2, the computing system 200 includes a testing workstation 202 and a user interface (UI) 204 interconnected with one another. As shown, the **UI** 204 may include one or more input devices 206 configured to receive inputs from a user, and one or more output devices 208 configured to provide outputs to the user.

In some examples, the one or more input devices 206 may comprise one or more touch screens, mice, keyboards, buttons, switches, slides, knobs, microphones, dials, and/or other input devices 206. In some examples, the one or more output devices 208 may comprise one or more display/touch screens, speakers, lights, haptic devices, and/or other output devices 208. In some examples, the output device(s) 208 (e.g., a display screen) of the **UI** 204 may output one or more representations of a material testing process 250 configured to allow a user to setup and/or execute a test method and/or analyze test results of the test method. In some examples, the input device(s) 206 of the UI 204 may receive input from a user, and send input data representative of the user input to the testing workstation 202.

In the example of FIG. 2, the example testing workstation 202 includes workstation communication interfaces 218a. In some examples, one or more of the workstation communication interfaces 218a are network interfaces. In some examples, one or more of the workstation communication interfaces 218a comprise hardware, firmware, and/or software configured to facilitate communication between the workstation 202 and one or more external networks, servers, systems, and/or devices.

As shown, one workstation communication interface 218a is in communication with the communication interface 218b of the material testing machine 102 through cable 106. As shown, the testing workstation 202 further includes a workstation communication interface 218a in communication with a network 220 (e.g., the Internet). In the example of FIG. 2, the testing workstation 202 is in communication with a remote interface 230 through the network 220 and workstation communication interface 218a. In some examples, the testing workstation 202 may be in communication with one or more other testing systems, servers, data repositories, and/or other devices through the network and/or workstation communication interface(s) 218a. As shown, the workstation communication interfaces 218a are electrically connected to a common electrical bus 219 of the testing workstation 202.

In some examples, the testing workstation 202 may be a computing device. In the example of FIG. 2, the testing workstation 202 includes workstation processing circuitry 224 connected to the common electrical bus 219. In some examples, the workstation processing circuitry 224 may comprise one or more processors. In some examples, the workstation processing circuitry 224 is configured to process information received from the **UI** 204, data importation device(s) 108, and/or material testing machine 102.

In some examples, the workstation processing circuitry 224 is configured to transmit (e.g., via communication interface(s) 218a) commands and/or test parameters to the material testing machine 102. In some examples, the workstation processing circuitry 224 is configured to output information to an operator through the UI 204. In some examples, the workstation processing circuitry 224 is configured to execute machine readable instructions stored in workstation memory circuitry 226.

In the example of FIG. 2, the testing workstation 202 further includes workstation memory circuitry 226 connected to the common electrical bus 219. As shown, the workstation memory circuitry 226 includes a material testing process 250. In some examples, the material testing process 250 comprises machine readable instructions. In some examples, the workstation processing circuitry 224 is configured to execute the machine readable instructions of the material testing process 250 to communicate with (e.g., the controller 214 of) the material testing machine 102 to setup a test of a material specimen 128, perform the test of the material specimen 128, and/or analyze test results of the test of the material specimen 128 (e.g., according to parameters of a test file 450).

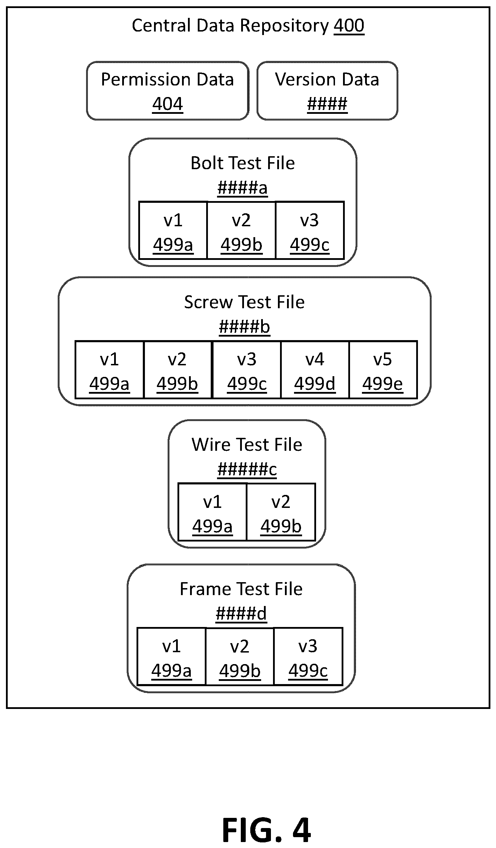

In some examples, a test of a material specimen 128 is performed (and/or its test results analyzed) according to a particular test method. In some examples, the test method is (at least partially) defined by the parameters of a test file 450 (see, e.g., FIG. 4). As used herein, a test file 450 refers to a collection of (e.g., stored) data that is representative of one or more (e.g., test, sample/specimen, analysis, etc.) parameters that (at least partially) define a test method.

In some examples, test parameters may include a date the test will be run, identification information of the test (e.g., number, name, type, description, etc.), target start/end positions of grip(s) 124, target start/end positions of the crosshead 120, target distance/direction moved by crosshead 120, target speed of movement of crosshead 120, expected result(s) of test (e.g., position/type of break, distance moved before break, force applied before break, post-test characteristics of sample, etc.), time(s) when sensor(s) 126 should take measurement(s), and/or other information relevant to a particular test method.

In some examples, specimen parameters may include, a date the specimen 128 was manufactured/shipped/packaged, identification information of the specimen 128 (e.g., number, name, description, etc.), pre-test characteristics of the specimen 128 (e.g., measurements/dimensions, material type, weight, color, shape, modulus, ultimate tensile strength, etc.), and/or other information relevant to a particular specimen 128. In some examples, analysis parameters may include one or more algorithms that may be used to evaluate results of the test method (and/or produce additional test results), one or more test result report format(s), and/or one or more thresholds and/or threshold ranges (e.g., by which test results may be adjudged to determine whether the specimen 128 passed or failed the test).

In some examples, some or all of the specimen, test, and/or analysis parameters are saved in (and/or specified by) a test file 450. In some examples, the specimen, test, and/or analysis parameters of the test file 450 are used by the testing workstation 202 when executing the material testing process 250, performing the test of the material specimen 128, and/or analyzing test results of the test of the material specimen 128.

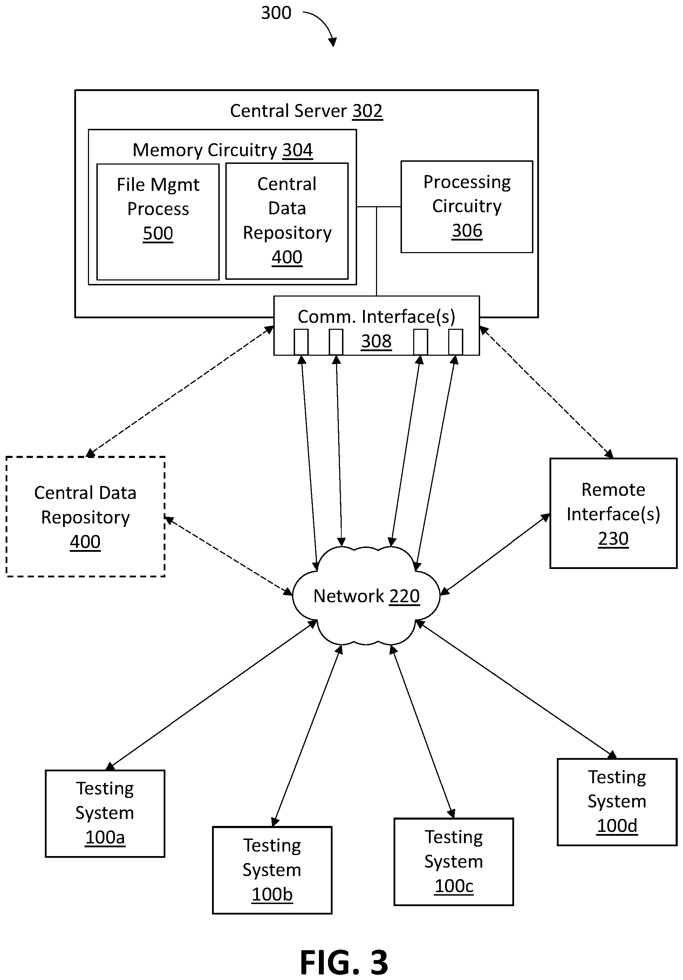

FIG. 3 shows an example of a distributed material testing system 300 having a central data repository 400 that stores a plurality of test files 450 (see FIG. 4) that may be used by a plurality of material testing systems 100. In the example of FIG. 3, the central data repository 400 is shown as being part of the server memory circuitry 304 of a central server 302. In some examples, the central data repository 400 may instead be separate from the central server 302, as shown via the dotted line depictions in FIG. 3.

In the example of FIG. 3, several material testing systems 100 are also shown as being connected (and/or in communication) with the central server 302 (and thus the central data repository 400). In particular, the material testing systems 100 are shown as being connected (and/or in communication) with the central server 302 through the central server communication interfaces 308 of the central server 302 and the network 220 (and/or the communication interface(s) 218 of the testing workstation 202). While a certain number of communication interfaces 218/308 are shown in the examples of FIGS. 2-3, the number is simply illustrative. In some examples, there may be more or fewer communication interfaces 218/308.

In some examples, the server communication interface(s) 308 enable and/or facilitate connections and/or communications with the network 220 and/or material testing systems 100 (via the workstation communication interface(s) 218). In some examples, one or more of the server communication interfaces 308 are network interfaces. In some examples, one or more of the server communication interfaces 308 comprise hardware, firmware, and/or software configured to facilitate communication between the central management server 302 and one or more external networks, systems, and/or devices (e.g., the network 220 and/or material testing systems 100).

In the example of FIG. 3, the server communication interface(s) 308 are connected (and/or in communication) with server processing circuitry 306 of the central server 302. In some examples, the server processing circuitry 306 may comprise one or more processors. In some examples, the server processing circuitry 224 is configured to execute machine readable instructions stored in the server memory circuitry 304, and/or query/access the central data repository 400.

FIG. 4 shows an example of a central data repository 400. In the example of FIG. 4, the central data repository 400 is shown as storing permission data 402, versioning data 404, and several different test files 450. Though not shown, in some examples, the central data repository 400 also stores several other files and/or types of files (e.g., document files, image files, test result files, etc.).

In some examples, storing files (e.g., test files 450) in a central data repository 400 may be helpful when there are several material testing systems 100 that need to use the file. In particular, when stored centrally, a test file 450 (and/or other file) may be used by any material testing system 100 connected and/or in communication with the central data repository 400. Additionally, a single copy of the test file 450 may be stored rather than each material testing system 100 having its own copy. Having a single central copy of the test file 450 stored in a central data repository 400 both saves on memory space, and also helps to ensure that each material testing system 100 is using the same test file 450 (and thereby running the same test method), which may be important for documentation and/or compliance with certain regulations.

In the example of FIG. 4, the central data repository 400 also stores different versions 499 of the each test file 450. In some examples, each version 499 of a file shares some characteristic, property, and/or attribute with each other version 499 of that same file (e.g., filename). In some examples, the data comprising the test file 450 (and/or other file), the version(s) 499, and/or the versioning data 404 may indicate the identify and/or value of the shared characteristic, property, and/or attribute of each version 499.

In some examples, each version 499 of a test file 450 (and/or other file) is different from each other version 499 of the test file 450 (and/or other file) in at least some respect. For example, if a new version 499 of a test file 450 is made, or an existing version 499 of the test file 450 is modified, both the new/modified version 499 and the old/existing version 499 are kept and/or saved as different versions 499 (rather than overwriting and/or deleting the old/existing version 499 and only keeping the new/modified version 499). In some examples, older versions 499 of a test file 450 and/or other file) may be marked as "obsolete" to avoid confusion with newer versions 499.

In some examples, there can be utility in keeping and/or allowing access to older versions 499 of test files 450 (and/or other files). For example, if an issue arises with a newer version 499 of a test file 450 (e.g. errors, strange results, etc.), it may be useful to revert to an older version 499 of the test file 450 that is known to be stable and/or reliable while the issues with the newer version 499 are resolved and/or a new version 499 is prepared. Additionally, it may be helpful to compare the newer version(s) 499 with the older version(s) 499 to help identify changes that might contribute to any issue.

While it can be useful to maintain prior versions 499 of certain test files 450 (and/or other files), there can also utility in making sure all (or at least most) of the users and/or material testing systems 100 use the same version 499 of a test file 450 (and/or other file). For example, it may be important for documentation and/or compliance purposes to ensure the same version 499 of a test file 450 is used to test a particular material specimen 128 (and/or a particular type of material specimen 128), regardless of the user and/or material testing system 100 that is performing the test. To ensure the same version 499 of a test file 450 is used, in some examples, the distributed material testing system 100 designates a particular version 499 of a test file 450 (and/or other file) as being the "active" version 499 (e.g., public version 499).

In some examples, the versioning data 404 stored by the central data repository 400 indicates which version 499 of a particular test file 450 (and/or other file) is the "active" version 499. In some examples, the versioning data 404 additionally, or alternatively, indicates which file versions 499 are "obsolete" versions 499 (e.g., former "active" versions 499). In some examples, the versioning data 404 additionally, or alternatively, indicates which file versions 499 are "draft" versions 499 (e.g., still in the process of being prepared/developed).

In some examples, while there may be several different "obsolete" and/or "draft" versions 499 of a particular test file 450 (and/or other file) at the same time, there can be only one "active" version 499 of the file at any given time. In some examples, most users and/or material testing systems 100 are only authorized to access and/or execute the "active" version 499 of a test file 450 (and/or other file). In some examples, through the "active" version 499 mechanism, the distributed material testing system 100 ensures most users and/or material testing systems 100 will use the same version 499 of the same test file 450 (and/or other file) when running tests (which may be important for documentation and/or compliance with certain regulations).

In some examples, a few select users with higher level and/or administrative permissions are authorized to access, modify, and/or execute all the different versions 499 of a test file 450 (and/or other file). In some examples, users with higher level and/or administrative permissions are also authorized to change which version 499 of a file is the "active" version 499. Thus, the distributed material testing system 100 maintains a mechanism through which the "active" version 499 of a test file 450 used by most users can be changed and/or reverted to a previous version 499 if necessary (e.g., if a newer version 499 starts to cause errors, malfunctions, strange results, etc.).

In the example of FIG. 4, the central data repository 400 is also shown as storing permission data 402 (and/or permission settings). In some examples, the permission data 402 indicates which users are authorized to access, modify, open, and/or execute which versions 499 of which test files 450 (and/or other files). In some examples, the permission data 402 indicates which users are authorized to access, modify, open, and/or execute which version types (e.g., "active," "draft," "obsolete," etc.) of test files 450 (and/or other files).

For example, the permission data 402 might indicate that users with basic and/or lower level permissions (e.g., production line testers) are only authorized to access, open, and/or execute "active" versions 499 of test files 450 (and/or other files). As another example, the permission data 402 might indicate that users with higher level and/or administrative permissions (e.g., R&D testers, managers, administrators, etc.) are authorized to access, modify, open, and/or execute all versions 499 of test files 450 (and/or other files) stored in the central data repository 400 (and/or server memory circuitry 304).

In the example of FIG. 3, the server memory circuitry 304 of the central server 302 is shown as being connected (and/or in communication) with server processing circuitry 306. In some examples, the server processing circuitry 306 may comprise one or more processors. In some examples, the server processing circuitry 224 is configured execute machine readable instructions stored in the server memory circuitry 304, and/or query the central data repository 400.

In the example of FIG. 3, the server memory circuitry 226 is shown as storing a file management process 500. While shown as part of the server memory circuitry 226 in the example of FIG. 3, in some examples, the file management process 500 may be implemented using discrete circuitry (e.g., of the server processing circuitry 306). In some examples, the file management process 500 is implemented using non-transitory machine readable instructions stored in the server memory circuitry 226 and/or executed by the server processing circuitry 306.

In some examples, the file management process 500 is configured to restrict users with basic/lower level authorizations to accessing, opening, and/or executing the "active" versions 499 of test files 450 (and/or other files) stored in the central data repository 400. In some examples, the file management process 500 is additionally, or alternatively, configured to enable users with higher level and/or administrative authorizations to access, open, modify, and/or execute any and/or all versions 499 of the test files 450 (and/or other files) stored in the central data repository 400. In some examples, the file management process 500 additionally, or alternatively, allows users with the higher level and/or administrative authorizations to change which version 499 of a test file 450 (and/or other file) is the active version 499.

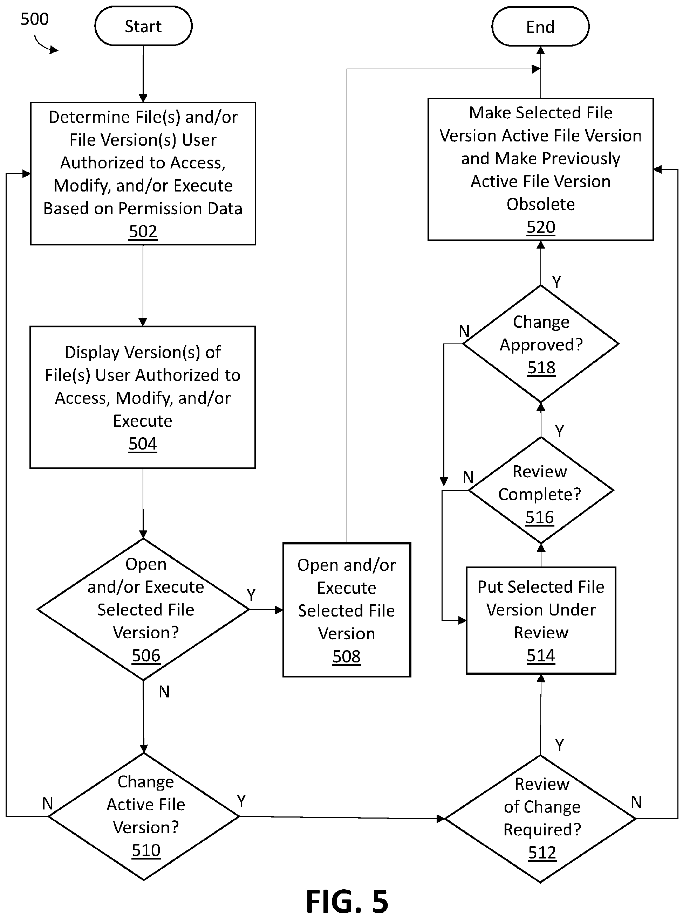

FIG. 5 is a flow diagram showing example operation of the file management process 500. In some examples, before using and/or progressing through the file management process 500, a user may be required to login and/or be authenticated (e.g., using user credentials, biometrics, RFID/NFC/Bluetooth/barcode devices, a UI 204, a remote interface 230, etc.). In some examples, different instances of the file management process 500 may execute for different users. While the file management process 500 is sometimes described below as conducting certain actions for the sake of understanding and convenience, it should be understood that one or more of the above described components of the distributed material testing system 300 (e.g., the server processing circuitry 306, remote interface(s) 230, material testing system(s) 100, etc.) may undertake the actions on behalf (and/or according to instructions) of the file management process 500.

In the example of FIG. 5, the file management process 500 begins at block 502, where the file management process 500 determines a permission level of the logged in user. In some examples, the permission level is determined based on the permission data 402 stored in the central data repository 400. In some examples, at block 502, the file management process 500 further identifies the files and/or file versions 499 that the user is authorized to access, modify, open, and/or execute based on the permission level and/or permission data.

After block 502, the file management process 500 proceeds to block 504, where the file management process 500 identifies the files and/or file versions 499 stored in the central data repository 400 that the user is authorized to access, modify, open, and/or execute. In some examples, the identification of block 504 is based on the determinations of block 502. In some examples, the identification at block 504 is additionally, or alternatively, based on versioning data 404.

At block 504, the file management process 500 additionally, or alternatively, provides one or more human perceptible outputs (e.g., via a UI 204 and/or remote interface 230) representative of the files and/or file versions 499 that the user is authorized to access, modify, open, and/or execute. In some examples, a human perceptible output may be a visual, audio, haptic, textual, graphic, video, and/or other output perceivable and/or interpretable by a human.

In some examples, the one or more human perceptible outputs of block 504 allow for the user to select one or more of the identified files and/or file versions 499. In some examples, the one or more human perceptible outputs of block 504 additionally, or alternatively, allow for the user to request to access, modify, open, and/or execute a selected file version 499 (depending on the permissions/authorizations). In some examples, the one or more human perceptible outputs of block 504 allow for users with higher level and/or administrative level permissions to request for a different file version 499 to be made the "active" version 499.

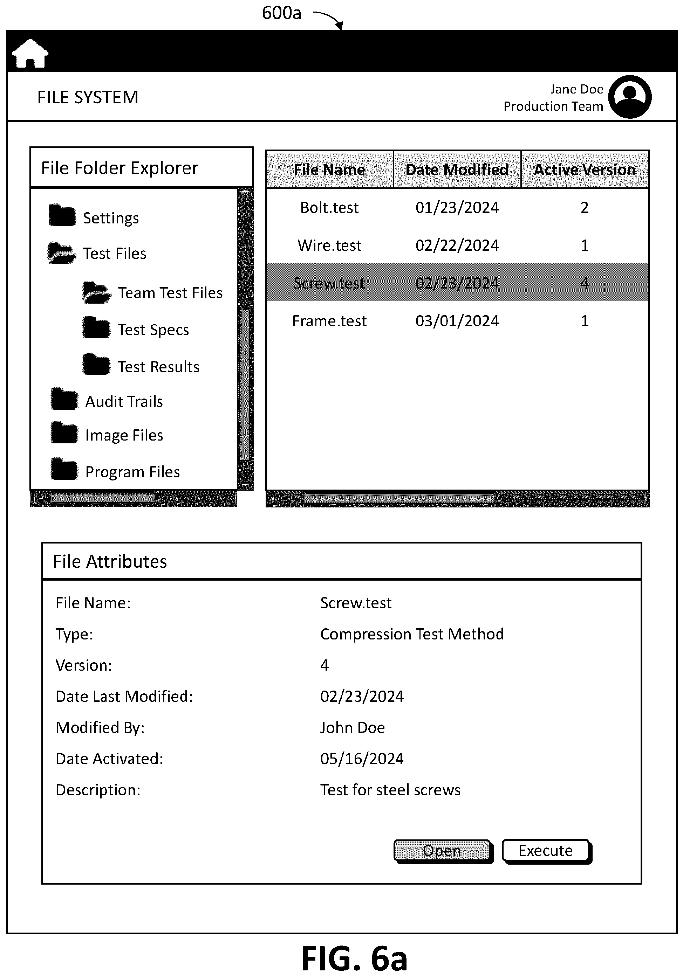

FIGS. 6a-6d are examples of graphical user interfaces (GUIs) 600 that might be output at block 504 (e.g., via a UI 204 and/or remote interface 230). FIG. 6a shows an example of a first basic file system GUI 600a that might be output for a user with basic and/or lower level permissions.

As shown, the first basic file system GUI 600a includes a file folder explorer window through which different file folders can be selected. Next to the file folder explorer window is shown a file list window listing the files in the selected file folder that are accessible to the user. Below the file folder explorer window and the file list window is shown a file attributes window that indicates certain attributes and/or properties (e.g., the version 499) of the test file 450 that was selected via the file list window. In some examples, the attributes and/or properties shown in the file attributes window of FIG. 6a (and/or other attributes and/or properties) may be stored in the central data repository 400 (e.g., as part of, and/or associated with, the file and/or file version 499).

Also shown in the file attributes window of the GUI 600a are "Open" and "Execute" buttons that the user can select to open and/or execute the "active" version 499 of the selected file. Notably, in the example of FIG. 6a, only the active version 499 of the file is shown and/or selectable, openable, and/or executable in the file list window and file attributes window. There is no available option that would allow the user to access, open, and/or execute a different version 499 of the selected test file 450 (e.g., because the logged in user only has basic and/or lower level permissions).

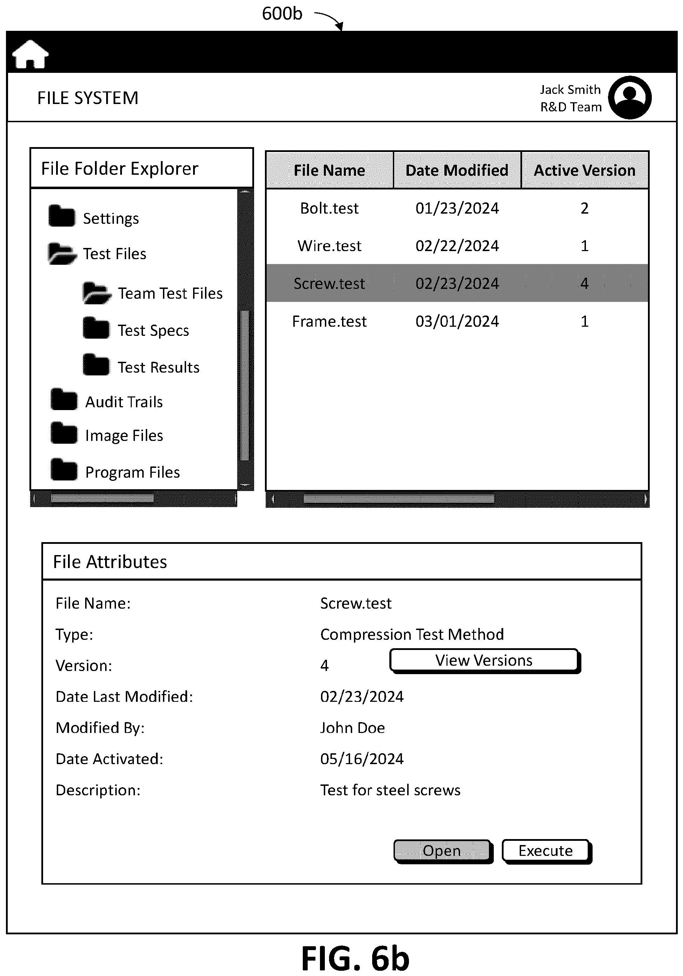

FIG. 6b shows an advanced file system GUI 600b that might be output for a user with more advanced, higher level, and/or administrative permissions that allow the user to see any/all file versions 499. The advanced file system GUI 600b is similar to the basic file system GUI 600a, except that the advanced file system GUI 600b has a "View Versions" selectable button in the file attributes window. In some examples, selection of the "View Versions" button allows a user to access, modify, open, and/or execute different versions 499 of the selected file.

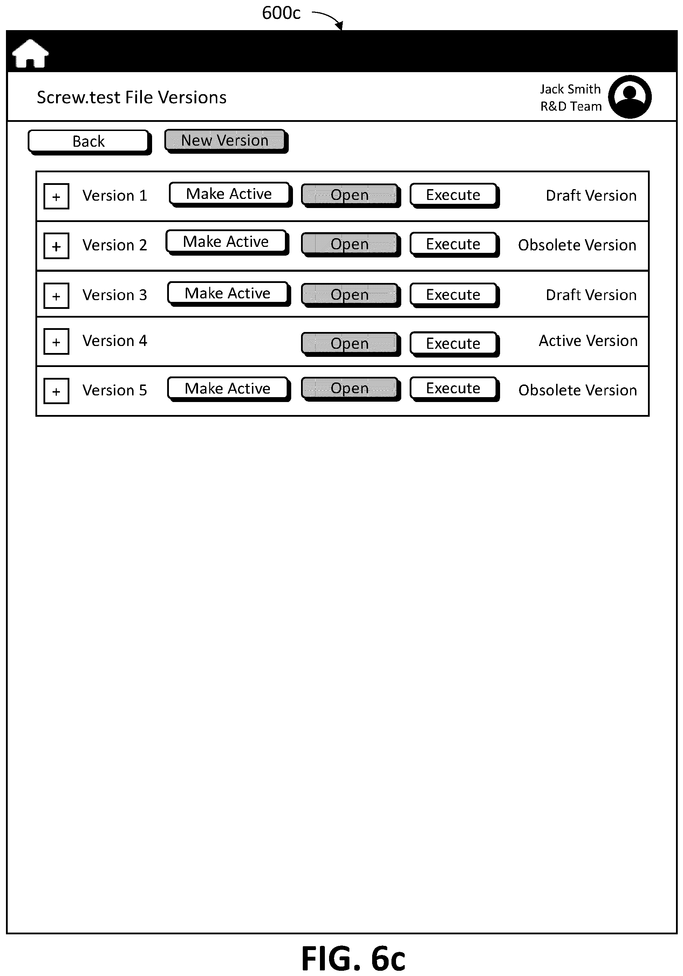

FIG. 6c shows a first file version GUI 600c that might be output to a user after selection to "View Versions" in the advanced file system GUI 600b. The first file version GUI 600c is shown as listing five different versions 499 of the selected screw test file 450, each with its own dialog box. The first file version GUI 600c further shows a type of each version 499 (e.g., active, draft, obsolete, etc.). The first file version GUI 600c of FIG. 6c additionally shows a selectable plus ("+") sign next to each version 499 that, in some examples, when selected, will result in display of additional details relating to the selected version 499.

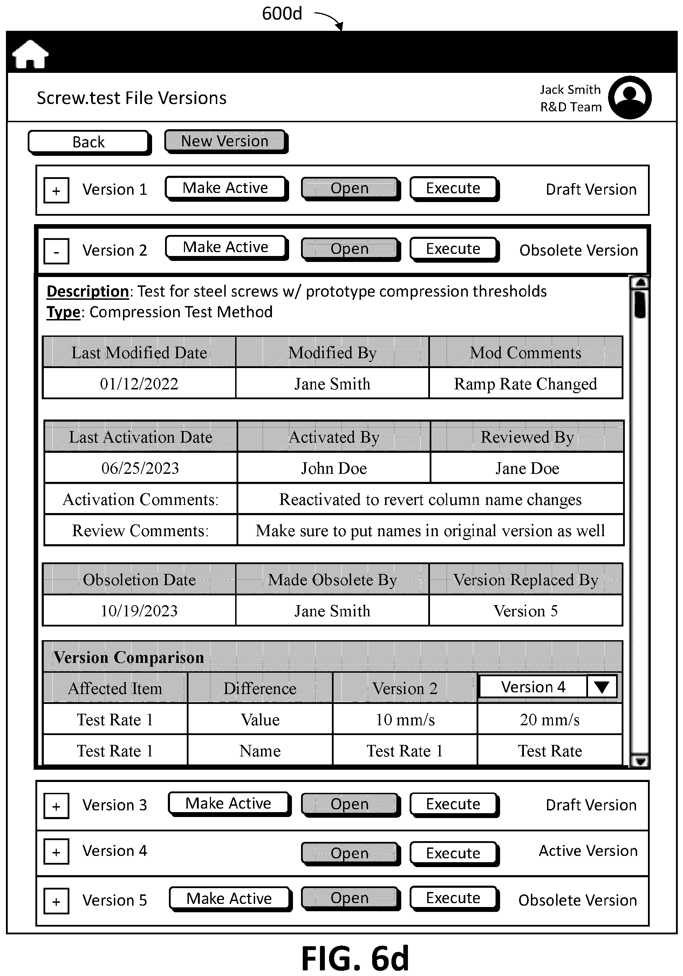

FIG. 6d shows an expanded file version GUI 600d such as might be displayed after selection of the selectable plus ("+") sign next to the second version 499 of the selected screw test file 450 in the first file version GUI 600c of FIG. 6c. As shown, the expanded file version GUI 600d lists detailed properties and/or attributes related to the selected second version 499 in an expanded dialog box. In some examples, the properties and/or attributes shown in the expanded file version GUI 600d (and/or other attributes and/or properties) may be stored in the central data repository 400 (e.g., as part of, and/or associated with, the file and/or file version 499). While particular properties and/or attributes are shown in the example of FIG. 6d, in some examples, additional, or alternative properties and/or attributes may be shown and/or stored.

In the examples of FIGS. 6c-6d, a "Make Active" button is also shown in the dialog box for each version 499 of the selected screw test file 450 (except for the currently active version 499). In some examples, selection of the "Make Active" button submits a request to change the selected version 499 to be the active version 499, and/or change the currently active version 499 to be an obsolete version 499.

In some examples, the requested change may occur immediately after request (e.g., where the user has administrative permissions). In some examples, the requested change may only occur after review (e.g., where the user has higher level permissions). In such examples, the status of the selected version 499 changes to under review until the request is approved by a different user (e.g., a user with administrative level permissions). In some examples, whether or not the requested change requires review depends upon the permissions of the user (e.g., whether the permissions are higher level or administrative).

In the examples of FIGS. 6c-6d, an "Open" button and an "Execute" button are also shown in the dialog box for each version 499. In some examples, selection of the "Open" button results in opening of the selected file version 499, while selection of the "Execute" button results in execution of the selected file version 499. In some examples, the "Execute" button may only appear for executable files (e.g., in both FIGS. 6c-6d and/or FIGS. 6a-6b).

In the example of FIG. 5, after block 504, the file management process 500 proceeds to block 506 where the file management process 500 checks whether the user has selected to open and/or execute a file. If so, the file management process 500 proceeds to block 508, where the file version 499 is determined, and/or the file version 499 is opened and/or executed. In some examples, the correct file version 499 to open/execute is determined based on an association between the selected button and the file, file version 499, and/or version type. In some examples, the correct file version to open/execute is additionally, or alternatively, determined based on the versioning data 404 and/or the version type of the selected file version 499.

In some examples, opening and/or executing the file version 499 involves downloading the file to a particular material testing system 100 and/or testing workstation. In some examples where the file is a test file 450, opening and/or executing the version 499 of the test file 450 may involve performing a test method defined by parameters of the test file 450 via a material testing system 100 and/or material testing process 250. After block 508, the file management process 500 ends (though, in some examples, the file management process 500 may instead return to block 502).

In the example of FIG. 5, if the user has not selected to open and/or execute the file version 499 at block 506 the file management process 500 next proceeds to block 510 where the file management process 500 checks whether the user has requested to change which file version 499 is the active file version 499 (e.g., via the "Make Active" button of the GUIs 600c-600d). If no such request has been made, the file management process 500 returns to block 502. If such a request has been made, the file management process 500 proceeds to block 512.

At block 512, the file management process 500 determines whether a review of the requested change is required before the change is undertaken. In some examples, this determination is based on the permission data 402, permission level of the logged in user, and/or corresponding authorizations. If the file management process 500 determines no review is required, the file management process 500 proceeds to block 520 (discussed below). If the file management process 500 determines a review is required, the file management process 500 proceeds to block 514.

At block 514, the file management process 500 changes the version type of the selected file version 499 to be under review (e.g., via modification of the versioning data 404). In some examples, at block 514, the file management process 500 additionally, or alternatively, notifies one or more reviewers (e.g., users with administrative level permissions) of the request to make the selected file version 499 the active file version 499.

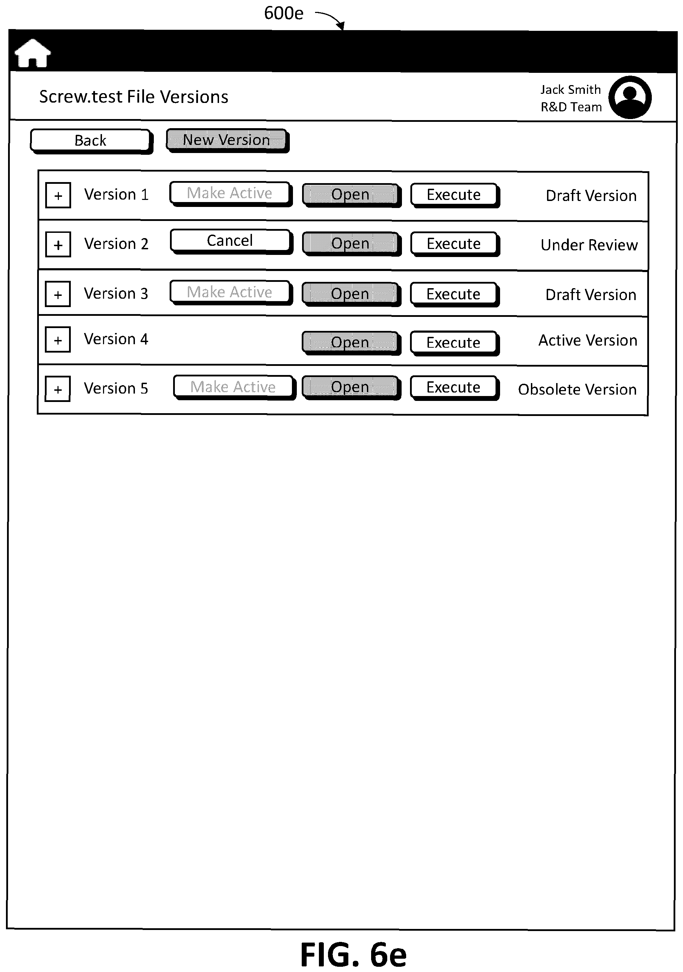

FIG. 6e shows a second file version GUI 600e, such as might be displayed at block 514. As shown, the status of the second version 499 of the screw test file 450 has changed from obsolete to under review. However, because the request to make the second version 499 of the screw test file 450 the active version 499 has yet to be reviewed and/or approved, the fourth version 499 of the screw test file 450 remains the active version 499.

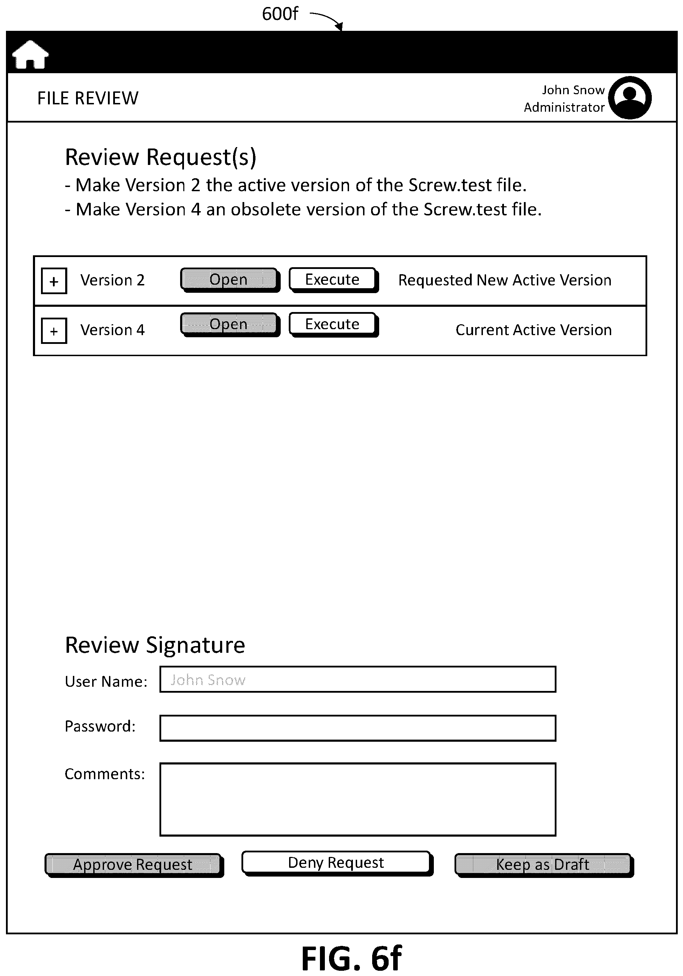

FIG. 6f shows a reviewer GUI 600f, such as might be shown to a reviewer after block 514. As shown, the reviewer GUI 600f includes the dialog boxes for both the currently active file version 499, and the requested new active file version 499. Each dialog box is expandable to give the reviewer more information about each version 499, as discussed above. Each dialog box can further be opened and/or executed via the corresponding buttons in each version 499 dialog box.

In the example reviewer GUI 600f of FIG. 6f, a selectable "Approve Request" button is shown at the bottom of the reviewer GUI 600f. In some examples, the selectable "Approve Request" button gives the reviewer the option to approve the request to make the selected file version 499 active, and/or make the currently active file version 499 obsolete. A selectable "Deny Request" button is also shown. In some examples, the selectable "Deny Request" button gives the reviewer the option to deny the request to make the selected file version 499 active, and/or make the currently active file version 499 obsolete.

A selectable "Keep as Draft" button is also shown. In some examples, the selectable "Keep as Draft" button gives the reviewer the option to make the selected file version 499 a draft (so the file version 499 can be modified and then resubmitted for review), and/or keep the currently active file version 499 for the time being. Space for comments are also provided, as well as space to enter credentials authenticating the reviewer's "signature" and/or review selection.

In the example of FIG. 5, the file management process 500 checks whether the reviewer has completed their review at block 516. If not, the file management process 500 returns to block 514. If so, the file management process 500 proceeds to block 518 where the file management process 500 checks whether the reviewer approved or denied the request. If the file management process 500 determines the reviewer denied the request, the file management process 500 ends (or returns to block 502). In examples where the reviewer selects to keep the selected file version 499 as a draft, the file management process 500 modifies the versioning data 404 to change the version type of the selected file version 499 to draft, and otherwise treats the selection as a denial.

If the file management process 500 determines at block 518 that the reviewer approved the request to make the selected file version 499 the active file version 499, the file management process 500 proceeds to block 520. At block 520, the file management process 500 modifies the versioning data 404 to make the selected file version 499 the active file version 499, and/or change the version type of the previously active file version 499 from active to obsolete. In some examples, the attributes and/or properties of the file versions 499 are also updated to reflect the date/time of their change, and/or any comments associated therewith. In the example of FIG. 5, the file management process 500 ends after block 520 (though, in some examples, the file management process 500 may instead return to block 502).

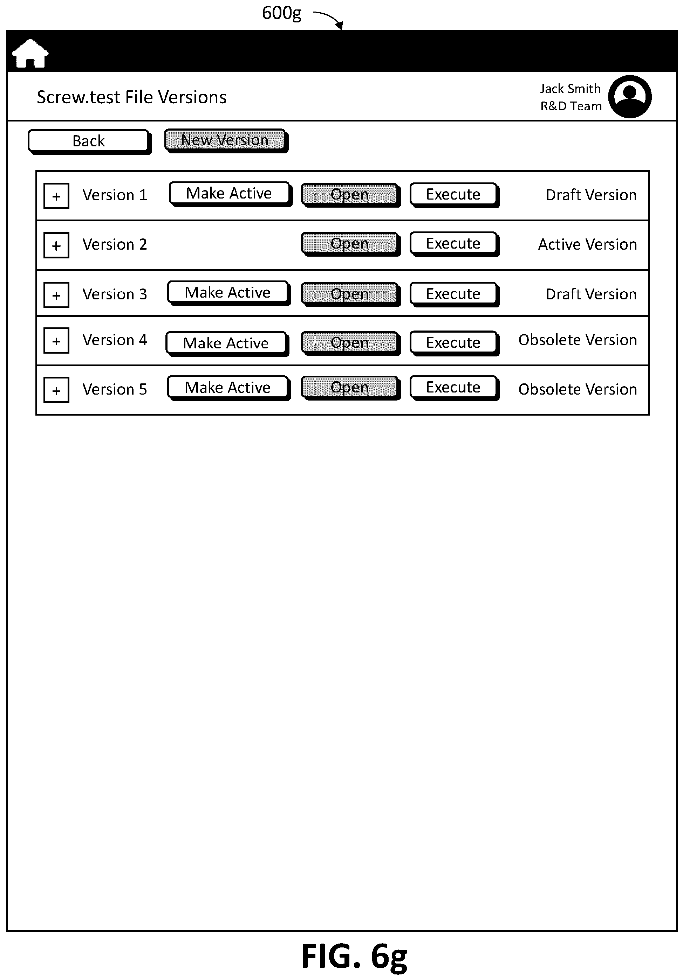

FIG. 6g shows an example of a third file version GUI 600g, such as might be shown to a user with higher level and/or administrative permissions after the second file version 499 is approved as active. As shown, the dialog box for the second version 499 of the screw test file 450 indicates that the second version 499 is now the active version. Meanwhile, the dialog box for the fourth version 499 of the screw test file indicates that the fourth version 499 is now an obsolete version 499.

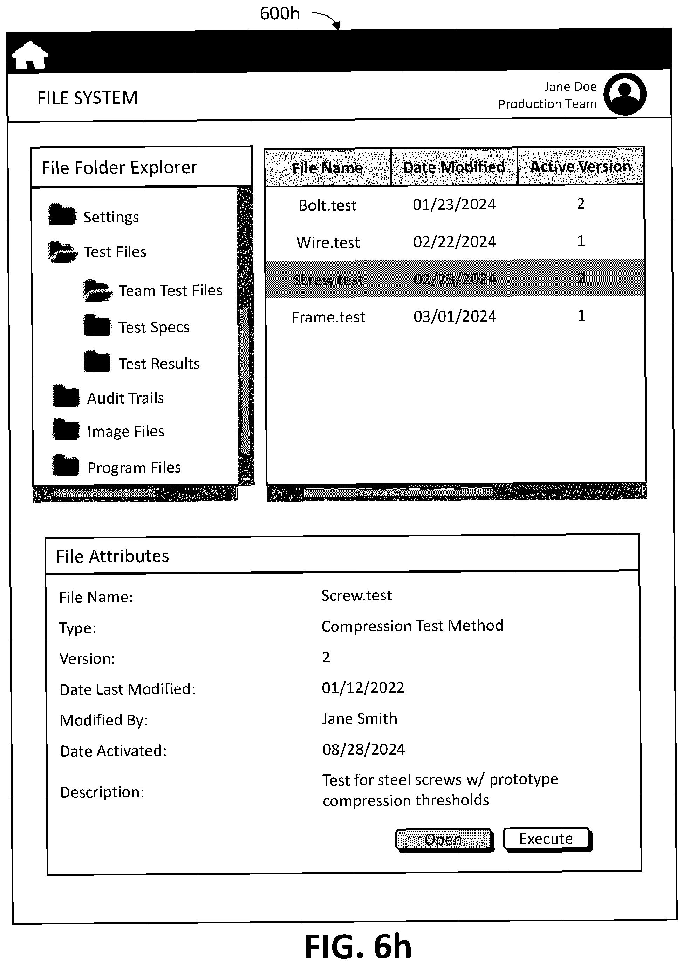

FIG. 6h shows an example of a second basic file system GUI 600h, such as might be shown to a user with basic permissions after the second file version 499 is approved as active. As shown, both the file list window and the file attributes window now show that the active version 499 of the screw test file 450 is the second version 499 rather than the fourth version 499. A selection by the user to open or execute the screw test file 450 via the second basic file system GUI 600h will result in the "active" second version 499 of the screw test file 450 being opened/executed.

The disclosed distributed material testing system 300 and/or file management process 500 allows users with higher level and/or administrative permissions to change which version 499 of a centrally stored test file 450 (and/or other file) is the "active" version 499 of the test file 450 (and/or other file). In some examples, users with lower level permissions are restricted to using the "active" version 499 of a test file 450 for testing, so as to ensure that most users and/or material testing systems 100 use the same test file version 499 (which can be important for documentation and/or compliance purposes). However, users with higher and/or administrative permissions are authorized to make an older, obsolete, test file version 499 the "active" test file version 499 in case, for example, there is some issue with the current active test file version 499. Through this reversion to an older, obsolete, test file version 499, testing may be able to continue in at least some capacity while a new version 499 of the test file 450 is prepared and/or the issues with the prior "active" version 499 of the test file 450 are resolved.

The present methods and/or systems may be realized in hardware, software, or a combination of hardware and software. The present methods and/or systems may be realized in a centralized fashion in at least one computing system, or in a distributed fashion where different elements are spread across several interconnected computing or cloud systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

As used herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As utilized herein, the terms "e.g.," and "for example" set off lists of one or more non-limiting examples, instances, or illustrations.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, circuitry is "operable" and/or "configured" to perform a function whenever the circuitry comprises the necessary hardware and/or code (if any is necessary) to perform the function, regardless of whether performance of the function is disabled or enabled (e.g., by a user-configurable setting, factory trim, etc.).

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor.
Certain embodiments of the invention are described in the following clauses:
Clause 1. A non-transitory computer readable medium comprising:
   a first version of a file;
   a second version of the file;
   versioning data indicating that the first version of the file is an active version of the file and the second version of the file is an obsolete version of the file;
   permission data indicating that:
      a first user is authorized to access or execute the active version of the file but not modify the active version of the file, and that the first user is not authorized to access, modify, or execute the obsolete version of the file, and
      a second user is authorized to access, modify, and execute the active version of the file and the obsolete version of the file; and
   machine readable instructions which, when executed by processing circuitry, cause the processing circuitry to:
      in response to receiving a reversion request from the second user via a user interface, modify the versioning data to indicate that the second version of the file is once again the active version of the file, and the first version of the file is the obsolete version of the file.
Clause 2. The non-transitory computer readable medium of clause 1, wherein the file comprises a test file defining a test method, the test method comprising a method of performing a test of a sample specimen using a material testing system, or of analyzing a test result of the test.
Clause 3. The non-transitory computer readable medium of clause 2, wherein the material testing system comprises:
   a material testing machine, the material testing machine comprising a test machine sensor, a test machine actuator, and a test machine controller configured to control the test machine actuator, and
   a testing workstation communicatively connected to the material testing machine.
Clause 4. The non-transitory computer readable medium of clause 1, wherein the versioning data includes a version history that indicates that the second version of the file was the active version of the file before the versioning data was changed to indicate that the second version of the file was the obsolete version of the file.
Clause 5. The non-transitory computer readable medium of clause 1, further comprising machine readable instructions which, when executed by the processing circuitry, cause the processing circuitry to:
   in response to receiving the reversion request, determine, based on the permission data, whether a review of the reversion request is required before the versioning data is modified.
Clause 6. The non-transitory computer readable medium of clause 5, further comprising machine readable instructions which, when executed by the processing circuitry, cause the processing circuitry to:
   in response to determining the review is not needed, modify the versioning data to indicate that the second version of the file is once again the active version of the file, and the first version of the file is the obsolete version of the file.
Clause 7. The non-transitory computer readable medium of clause 5, further comprising machine readable instructions which, when executed by the processing circuitry, cause the processing circuitry to:
   in response to determining the review is needed,
   modify the versioning data to indicate that the second version of the file is pending review,
   notify a third user that the second version of the file is awaiting their review, and
   in response to receiving a review approval input from the third user, modify the versioning data to indicate that the second version of the file is the active version of the file and the first version of the file is the obsolete version of the file.
Clause 8. A system, comprising:
   a central data repository in communication with a material testing system, the central data repository storing:
      a first version of a test file, the test file defining a test method, the test method comprising a method of performing a test of a sample specimen using the material testing system, or of analyzing a test result of the test,
      a second version of the test file,
      versioning data indicating that the first version of the test file is an active version of the test file and the second version of the test file is an obsolete version of the test file, and
      permission data indicating that a first user is authorized to access or execute the active version of the test file but not modify the active version of the test file, and that the first user is not authorized to access, modify, or execute the obsolete version of the test file,
      the permission data further indicating that a second user is authorized to access, modify, and execute the active version of the test file and the obsolete version of the test file;
   a user interface configured to receive a reversion request from the second user; and
   a central server comprising, or in communication with, the central data repository, the central server comprising central server processing circuitry configured to:
      in response to the reversion request, modify the versioning data to indicate that the second version of the test file is once again the active version of the test file, and the first version of the test file is the obsolete version of the test file.
Clause 9. The system of clause 8, wherein the central data repository is in communication with a plurality of material testing systems comprising the material testing system, the test method defined by the test file being performable by each material testing system of two or more material testing systems of the plurality of material testing systems.
Clause 10. The system of clause 8, wherein the material testing system comprises:
   a material testing machine, the material testing machine comprising a test machine sensor, a test machine actuator, and a test machine controller configured to control the test machine actuator, and
   a testing workstation communicatively connected to the material testing machine.
Clause 11. The system of clause 10, wherein, in response to the user interface receiving an execution request from the first user or the second user to execute the active version of the test file, the testing workstation is configured to communicate with the test machine controller to control the material testing machine and conduct the test method defined by the active version of the test file.
Clause 12. The system of clause 8, wherein the central server processing circuitry is further configured to: in response to receiving the reversion request, determine, based on the permission data, whether a review of the reversion request is required before the versioning data is modified.
Clause 13. The system of clause 12, wherein the central server processing circuitry is configured to: in response to determining the review is not needed, modify the versioning data to indicate that the second version of the file is once again the active version of the file, and the first version of the file is the obsolete version of the file.
Clause 14. The system of clause 12, wherein the central server processing circuitry is configured to:
   in response to determining the review is needed,
   modify the versioning data to indicate that the second version of the file is pending review,
   notify a third user that the pending review version of the file is awaiting their review, and
   in response to receiving a review approval input from the third user, modify the versioning data to indicate that the second version of the file is the active version of the file and the first version of the file is the obsolete version of the file.
Clause 15. A method, comprising:
   storing, in a central data repository that is in communication with a material testing system:
      a first version of a test file, the test file defining a test method, the test method comprising a method of performing a test of a sample specimen using the material testing system, or of analyzing a test result of the test,
      a second version of the test file,
      versioning data indicating that the first version of the test file is an active version of the test file and the second version of the test file is an obsolete version of the test file,
      permission data indicating that:
         a first user is authorized to access or execute the active version of the test file but not modify the active version of the test file, and that the first user is not authorized to access, modify, or execute the obsolete version of the test file, and
         a second user is authorized to access, modify, and execute the active version of the test file and the obsolete version of the test file;
   receiving a reversion request from the second user via a user interface; and
   in response to receiving the reversion request from the second user, modifying the versioning data via central server processing circuitry of a central server to indicate that the second version of the test file is once again the active version of the test file, and the first version of the test file is the obsolete version of the test file.
Clause 16. The method of clause 15, wherein the central data repository is in communication with a plurality of material testing systems comprising the material testing system, the test method defined by the test file being performable by each material testing system of two or more material testing systems of the plurality of material testing systems.
Clause 17. The method of clause 15, wherein the material testing system comprises:
   a material testing machine, the material testing machine comprising a test machine sensor, a test machine actuator, and a test machine controller configured to control the test machine actuator, and
   a testing workstation communicatively connected to the material testing machine.
Clause 18. The method of clause 17, further comprising: in response receiving, via the user interface, an execution request from the first user or the second user to execute the active version of the test file, conducting the test method defined by the active version of the test file via the material testing machine.
Clause 19. The method of clause 15, further comprising:
   in response to receiving the reversion request, determine, via the central server processing circuitry and based on the permission data, whether a review of the reversion request is required before the versioning data is modified; and
   in response to determining the review is not needed, modify the versioning data to indicate that the second version of the file is once again the active version of the file, and the first version of the file is the obsolete version of the file.
Clause 20. The method of clause 15, further comprising:
   in response to receiving the reversion request, determine, via the central server processing circuitry and based on the permission data, whether a review of the reversion request is required before the versioning data is modified; and
   in response to determining the review is needed,
   modify the versioning data, via the central server processing, to indicate that the second version of the file is pending review,
      notify a third user, via the central server processing, that the pending review version of the file is awaiting their review, and
      in response to receiving a review approval input from the third user, modify the versioning data, via the central server processing, to indicate that the second version of the file is the active version of the file and the first version of the file is the obsolete version of the file.

## Claims

1. A non-transitory computer readable medium comprising:
a first version of a file;
a second version of the file;
versioning data indicating that the first version of the file is an active version of the file and the second version of the file is an obsolete version of the file;
permission data indicating that:
a first user is authorized to access or execute the active version of the file but not modify the active version of the file, and that the first user is not authorized to access, modify, or execute the obsolete version of the file, and
a second user is authorized to access, modify, and execute the active version of the file and the obsolete version of the file; and
machine readable instructions which, when executed by processing circuitry, cause the processing circuitry to:
in response to receiving a reversion request from the second user via a user interface, modify the versioning data to indicate that the second version of the file is once again the active version of the file, and the first version of the file is the obsolete version of the file.

2. The non-transitory computer readable medium of claim 1, wherein the file comprises a test file defining a test method, the test method comprising a method of performing a test of a sample specimen using a material testing system, or of analyzing a test result of the test, and optionally
wherein the material testing system comprises:
a material testing machine, the material testing machine comprising a test machine sensor, a test machine actuator, and a test machine controller configured to control the test machine actuator, and
a testing workstation communicatively connected to the material testing machine.

3. The non-transitory computer readable medium of claim 1 or claim 2, wherein the versioning data includes a version history that indicates that the second version of the file was the active version of the file before the versioning data was changed to indicate that the second version of the file was the obsolete version of the file.

4. The non-transitory computer readable medium of any one of claims 1 to 3, further comprising machine readable instructions which, when executed by the processing circuitry, cause the processing circuitry to:
in response to receiving the reversion request, determine, based on the permission data, whether a review of the reversion request is required before the versioning data is modified.

5. The non-transitory computer readable medium of claim 4, further comprising machine readable instructions which, when executed by the processing circuitry, cause the processing circuitry to:
in response to determining the review is not needed, modify the versioning data to indicate that the second version of the file is once again the active version of the file, and the first version of the file is the obsolete version of the file, and/or
the non-transitory computer readable medium further comprising machine readable instructions which, when executed by the processing circuitry, cause the processing circuitry to:
in response to determining the review is needed,
modify the versioning data to indicate that the second version of the file is pending review,
notify a third user that the second version of the file is awaiting their review, and
in response to receiving a review approval input from the third user, modify the versioning data to indicate that the second version of the file is the active version of the file and the first version of the file is the obsolete version of the file.

6. A system, comprising:
a central data repository in communication with a material testing system, the central data repository storing:
a first version of a test file, the test file defining a test method, the test method comprising a method of performing a test of a sample specimen using the material testing system, or of analyzing a test result of the test,
a second version of the test file,
versioning data indicating that the first version of the test file is an active version of the test file and the second version of the test file is an obsolete version of the test file, and
permission data indicating that a first user is authorized to access or execute the active version of the test file but not modify the active version of the test file, and that the first user is not authorized to access, modify, or execute the obsolete version of the test file,
the permission data further indicating that a second user is authorized to access, modify, and execute the active version of the test file and the obsolete version of the test file;
a user interface configured to receive a reversion request from the second user; and
a central server comprising, or in communication with, the central data repository, the central server comprising central server processing circuitry configured to:
in response to the reversion request, modify the versioning data to indicate that the second version of the test file is once again the active version of the test file, and the first version of the test file is the obsolete version of the test file.

7. The system of claim 6, wherein the central data repository is in communication with a plurality of material testing systems comprising the material testing system, the test method defined by the test file being performable by each material testing system of two or more material testing systems of the plurality of material testing systems.

8. The system of claim 6 or claim 7, wherein the material testing system comprises:
a material testing machine, the material testing machine comprising a test machine sensor, a test machine actuator, and a test machine controller configured to control the test machine actuator, and
a testing workstation communicatively connected to the material testing machine, and optionally
wherein, in response to the user interface receiving an execution request from the first user or the second user to execute the active version of the test file, the testing workstation is configured to communicate with the test machine controller to control the material testing machine and conduct the test method defined by the active version of the test file.

9. The system of any one of claims 6 to 8, wherein the central server processing circuitry is further configured to: in response to receiving the reversion request, determine, based on the permission data, whether a review of the reversion request is required before the versioning data is modified.

10. The system of claim 9, wherein the central server processing circuitry is configured to: in response to determining the review is not needed, modify the versioning data to indicate that the second version of the file is once again the active version of the file, and the first version of the file is the obsolete version of the file, and/or
wherein the central server processing circuitry is configured to:
in response to determining the review is needed,
modify the versioning data to indicate that the second version of the file is pending review,
notify a third user that the pending review version of the file is awaiting their review, and
in response to receiving a review approval input from the third user, modify the versioning data to indicate that the second version of the file is the active version of the file and the first version of the file is the obsolete version of the file.

11. A method, comprising:
storing, in a central data repository that is in communication with a material testing system:
a first version of a test file, the test file defining a test method, the test method comprising a method of performing a test of a sample specimen using the material testing system, or of analyzing a test result of the test,
a second version of the test file,
versioning data indicating that the first version of the test file is an active version of the test file and the second version of the test file is an obsolete version of the test file,
permission data indicating that:
a first user is authorized to access or execute the active version of the test file but not modify the active version of the test file, and that the first user is not authorized to access, modify, or execute the obsolete version of the test file, and
a second user is authorized to access, modify, and execute the active version of the test file and the obsolete version of the test file;
receiving a reversion request from the second user via a user interface; and
in response to receiving the reversion request from the second user, modifying the versioning data via central server processing circuitry of a central server to indicate that the second version of the test file is once again the active version of the test file, and the first version of the test file is the obsolete version of the test file.

12. The method of claim 11, wherein the central data repository is in communication with a plurality of material testing systems comprising the material testing system, the test method defined by the test file being performable by each material testing system of two or more material testing systems of the plurality of material testing systems.

13. The method of claim 11 or claim 12, wherein the material testing system comprises:
a material testing machine, the material testing machine comprising a test machine sensor, a test machine actuator, and a test machine controller configured to control the test machine actuator, and
a testing workstation communicatively connected to the material testing machine, and optionally
the method further comprising: in response receiving, via the user interface, an execution request from the first user or the second user to execute the active version of the test file, conducting the test method defined by the active version of the test file via the material testing machine.

14. The method of any one of claims 11 to 13, further comprising:
in response to receiving the reversion request, determine, via the central server processing circuitry and based on the permission data, whether a review of the reversion request is required before the versioning data is modified; and
in response to determining the review is not needed, modify the versioning data to indicate that the second version of the file is once again the active version of the file, and the first version of the file is the obsolete version of the file.

15. The method of any one of claims 11 to 14, further comprising:
in response to receiving the reversion request, determine, via the central server processing circuitry and based on the permission data, whether a review of the reversion request is required before the versioning data is modified; and
in response to determining the review is needed,
modify the versioning data, via the central server processing, to indicate that the second version of the file is pending review,
notify a third user, via the central server processing, that the pending review version of the file is awaiting their review, and
in response to receiving a review approval input from the third user, modify the versioning data, via the central server processing, to indicate that the second version of the file is the active version of the file and the first version of the file is the obsolete version of the file.
